(19) Europäisches Patentamt
European Patent Office
Office européen des brevets

(11) **EP 4 439 425 A1**

(12) **EUROPEAN PATENT APPLICATION**

(43) Date of publication:
**02.10.2024 Bulletin 2024/40**

(21) Application number: **24158122.2**

(22) Date of filing: **16.02.2024**

(51) International Patent Classification (IPC):
**G06Q 10/08** (2024.01)    **G06Q 30/018** (2023.01)

(52) Cooperative Patent Classification (CPC):
**G06Q 30/018; G06Q 10/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058066**

(71) Applicant: **TOYOTA JIDOSHA KABUSHIKI
KAISHA
Toyota-shi, Aichi-ken, 471-8571 (JP)**

(72) Inventors:
• **FUJIWARA, Teruyoshi**
  **Aichi-ken, 471-8571 (JP)**
• **NITTA, Iwao**
  **Aichi-ken, 471-8571 (JP)**
• **SUZUKI, Ryota**
  **Aichi, 451-6015 (JP)**

(74) Representative: **Cabinet Beau de Loménie
158, rue de l'Université
75340 Paris Cedex 07 (FR)**

(54) **SERVER DEVICE, INFORMATION PROCESSING METHOD, AND NON-TEMPORARY STORAGE MEDIUM**

(57)    Provided is a server device (1) including a storage device that stores product information on a product of each company included in a supply chain for each company, and a control unit (11). The product information includes traceability-related information, and the control unit (11) collects actual result data related to an actual product production result of a first product at a predetermined time, updates the traceability-related information corresponding to the first product using the actual result data, and updates the traceability-related information corresponding to the first product using alternative data stored in the storage device when the actual result data cannot be collected at the predetermined time.

**FIG. 1**

EP 4 439 425 A1

**Description**

BACKGROUND OF THE INVENTION

1. Field of the Invention

The present disclosure relates to an information processing device, a method, and a non-temporary storage medium for a supply chain.

2. Description of Related Art

A system in which information is shared among a plurality of companies that constitutes a supply chain is well-known. For example, Japanese Unexamined Patent Application Publication No. 2004-171146 discloses a system that shares information between companies included in a supply chain.

SUMMARY OF THE INVENTION

The present disclosure provides a server device, an information processing method, and a program that can improve traceability of traceability-related information.

A first aspect of the present disclosure relates to a server device including a storage device that is configured to store product information on a product of each company included in a supply chain for each company, and a control unit. In the server device, the product information includes traceability-related information, and the control unit is configured to collect actual result data related to an actual product production result of a first product at a predetermined time, update the traceability-related information corresponding to the first product using the actual result data, and update the traceability-related information corresponding to the first product using alternative data stored in the storage device when the actual result data cannot be collected at the predetermined time.

In the first aspect, the control unit may be configured to periodically collect the actual result data and update the traceability-related information corresponding to the first product.

In the first aspect, the storage device may be configured to store a plurality of types of the alternative data for the first product, and the control unit may be configured to select a type of the alternative data to be used based on a characteristic of the actual result data collected in the past.

In the first aspect, the alternative data may include either (1) a first type of alternative data generated based on the actual result data collected in the past, or (2) a second type of alternative data generated based on predetermined information corresponding to the first product.

In the first aspect, the control unit may receive and store the product information from a company that produces the first product, and the predetermined information may be an initial value of the traceability-related information included in the received product information.

In the first aspect, the traceability-related information may include a carbon footprint of products value, which is a value used to track the carbon footprint, and the control unit may be configured to select a type of the alternative data to be used, based on a fluctuation range of the carbon footprint of products value during a predetermined period in the past, the carbon footprint of products value being included in the actual result data.

In the first aspect, the control unit may be configured to use the second type of alternative data when the fluctuation range of the carbon footprint of products value in a first period in the past is equal to or greater than a predetermined value with respect to the actual result data.

In the first aspect, the traceability-related information may include a value regarding an amount of greenhouse gas emitted when producing the first product.

In the first aspect, the traceability-related information may include a value regarding an amount of energy consumed when producing the first product.

In the first aspect, the traceability-related information may include a value representing a recycling rate regarding a predetermined raw material.

In the first aspect, the traceability-related information may include a value representing a score regarding due diligence.

A second aspect of the present disclosure relates to an information processing method that is executed by a server device, in which the server device includes a storage device that is configured to store product information on a product of each company included in a supply chain for each company, and a control unit, and the product information includes traceability-related information. The information processing method includes collecting actual result data related to an actual product production result of a first product at a predetermined time, updating, by the control unit, the traceability-related information corresponding to the first product using the actual result data, and updating, by the control unit, the traceability-related information corresponding to the first product using alternative data stored in the storage device when the actual result data cannot be collected at the predetermined time.

The second aspect may further include periodically collecting, by the control unit, the actual result data and updating the traceability-related information corresponding to the first product.

The second aspect may further include storing, by the storage device, a plurality of types of the alternative data by the storage device, and selecting, by the control unit, a type of the alternative data to be used based on a characteristic of the actual result data collected in the past.

In the second aspect, the alternative data may include either (1) a first type of alternative data generated based on the actual result data collected in the past, or (2) a second type of alternative data generated based on predetermined information corresponding to the first product.

The second aspect may further include receiving and storing, by the control unit, the product information from a company that produces the first product, in which the predetermined information may be an initial value of the traceability-related information included in the received product information.

In the second aspect, the traceability-related information may include a carbon footprint of products value, which is a value used to track the carbon footprint. The second aspect may further include selecting, by the control unit, a type of the alternative data to be used, based on a fluctuation range of the carbon footprint of products value during a predetermined period in the past, the carbon footprint of products value being included in the actual result data.

The second aspect may further include using by the control unit the second type of alternative data when the fluctuation range of the carbon footprint of products value in a first period in the past is equal to or greater than a predetermined value with respect to the actual result data.

In the second aspect, the traceability-related information may include a value regarding an amount of greenhouse gas emitted when producing the first product.

A third aspect of the present disclosure relates to a non-transitory storage medium storing instructions that are executable by one or more processors and that cause the one or more processors to perform function. The function includes the information processing method according to the second aspect.

With each aspect of the present disclosure, traceability of traceability-related information can be improved.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram illustrating a supply chain according to a first embodiment;
FIG. 2 is a diagram illustrating an example of a relationship between products supplied through the supply chain;
FIG. 3 is a diagram illustrating an overview of processing performed between a company terminal and a server device;
FIG. 4 is a hardware configuration diagram of the server device according to the first embodiment;
FIG. 5 is a hardware configuration diagram of the company terminal according to the first embodiment;
FIG. 6 is a software configuration diagram of the server device according to the first embodiment;
FIG. 7 is a software configuration diagram of the company terminal according to the first embodiment;
FIG. 8 is an example of product information generated by a product information generation unit;
FIG. 9 is a diagram illustrating a flow of processing executed by the server device;
FIG. 10 is a diagram illustrating a method of generating alternative data;
FIG. 11 is a diagram illustrating fluctuations in CFP values;
FIG. 12 is a diagram illustrating the product tree and an amount of carbon dioxide emitted in each process;
FIG. 13 is an example of a screen outputting the product tree as an image;
FIG. 14 is an example of the product tree in the case where products for which there is no access authority are not disclosed;
FIG. 15 is a flowchart of processing performed by the server device;
FIG. 16 is a flowchart of processing performed by the server device; and
FIG. 17 is a flowchart of processing performed by the server device.

DETAILED DESCRIPTION OF EMBODIMENTS

In recent years, there has been a demand for traceability, such as the desire to track the amount of greenhouse gases emitted when manufacturing products such as automobiles and batteries, in other words, a desire to track carbon footprints.

Here, consider a case where a product is supplied by a supply chain that includes a plurality of companies. In one example, at least some companies (intermediate suppliers) included in the supply chain may receive parts from one or more upstream companies, use the received parts to produce (including manufacture) subject company's products, and deliver the produced subject company's products to companies (downstream companies) in the next process. The most upstream companies may directly produce subject company's products and deliver the produced subject company's products to companies in the next process. Some companies in a supply chain may directly deliver products received from other companies to another company (that is, engage in distribution). A plurality of companies repeats this process, and in the final process, the final product is obtained.

In the case of obtaining products related to automobiles, the supply chain may consist of an OEM manufacturer and a plurality of suppliers. The OEM manufacturer may be a company (the most downstream company) that assembles the final product, and the supplier may be a company that supplies parts, materials, assemblies, or the like for producing the product. Companies included in the supply chain may be determined depending on the product.

In the following description, parts and the like produced by each of a plurality of suppliers will be referred to as "products", and the final product will be referred to as "final product". In one example, the final product may be supplied to a consumer. Further, suppliers and OEM manufacturers included in the supply chain are simply referred to as "companies". Furthermore, each of a plurality of levels that exists within the supply chain is referred to as a "Tier".

In such a system, in order to perform calculations related to traceability (for example, calculate the total amount of greenhouse gases emitted during the manufacturing of the final product), it is required to collect information (product information) regarding a plurality of products that constitutes the final product. For example, by collecting product information, including information (traceability-related information) such as the amount of greenhouse gases emitted when producing the target product, from a plurality of companies in the supply chain, it is possible to perform all of the traceability-related calculation to the final product.

Traceability-related information may vary depending on the production status of the product. For example, traceability-related information includes the amount of carbon dioxide emitted during product production, but the emission amount of carbon dioxide is not uniform throughout the year. Therefore, in order to keep information on traceability up-to-date, it is necessary to collect data (hereinafter referred to as actual result data, for example, data indicating carbon dioxide emission amounts) related to actual product production results from a plurality of companies, and update stored traceability-related information using the actual result data.

However, when a company is unable to collect actual result data for some reason, the data necessary for calculations related to traceability is missing, so problems may occur such as the inability to perform calculations on the entire final product.

The server device according to the present disclosure solves this problem.

A server device according to an aspect of the present disclosure is a server device including a storage device that stores product information on a product of each company included in a supply chain for each company, and a control unit.

Specifically, the product information includes traceability-related information, and the control unit is configured to collect actual result data related to an actual product production result of a first product at a predetermined time, update the traceability-related information corresponding to the first product using the actual result data, and update the traceability-related information corresponding to the first product using alternative data stored in the storage device when the actual result data cannot be collected at the predetermined time.

Product information is information on products produced by each company included in the supply chain. The product information includes information (traceability-related information) for performing calculations related to traceability. The traceability-related information may include, for example, the amount of greenhouse gases emitted when producing the first product and the amount of energy consumed.

The control unit collects actual result data related to the actual production result of the first product at a predetermined time, and uses this to update traceability-related information included in the first product information corresponding to the first product. The actual result data may be collected directly from the production site (factory, or the like) of the first product, for example.

Further, the server device according to the present disclosure uses alternative data stored in the storage device to update traceability-related information included in the first product information when actual result data cannot be collected at a predetermined time.

The alternative data is data used in place of the actual result data. The alternative data may be generated in advance by the server device and stored in the storage device, or may be generated each time the actual result data cannot be collected and stored in the storage device.

The alternative data may be generated based on actual result data collected in the past. For example, the latest actual result data can be predicted based on the actual result data collected in the past, and the result can be used as an alternative for the actual result data.

Further, the alternative data may be generated based on predetermined information corresponding to the first product. The predetermined information may be an initial value of traceability-related information included in the product information.

The control unit may select the type of alternative data to be used based on characteristics of the actual result data.

In addition, traceability-related information may include a CFP (carbon footprint of products) value, which is a value used to track a carbon footprint, and the control unit may select the type of alternative data to be used based on the fluctuation range of the CFP value during a predetermined period in the past. The CFP value is included in the actual result data.

For example, with regard to actual result data that is generated in the past, when the fluctuation range of the CFP value in the past first period is equal to or greater than a predetermined value, it is not preferable to generate alternative data using the past actual result data. Therefore, in such a case, the second type of alternative data may be used.

With this configuration, even when there is a delay in collection of actual result data for some of a plurality of products, traceability-related information can be updated using alternative data. That is, traceability of traceability-related information can be improved.

Hereinafter, specific embodiments of the present disclosure will be described based on the drawings. Unless otherwise specified, the hardware configuration, module configuration, functional configuration, and the like described in each embodiment are not intended to limit the technical scope of the disclosure.


First Embodiment

The information processing system according to the present embodiment is a system that provides information on products supplied by a supply chain that includes a plurality of companies. Information on products is typically information on traceability. Companies belonging to the supply chain may be determined as appropriate depending on the attributes of the products and the like.

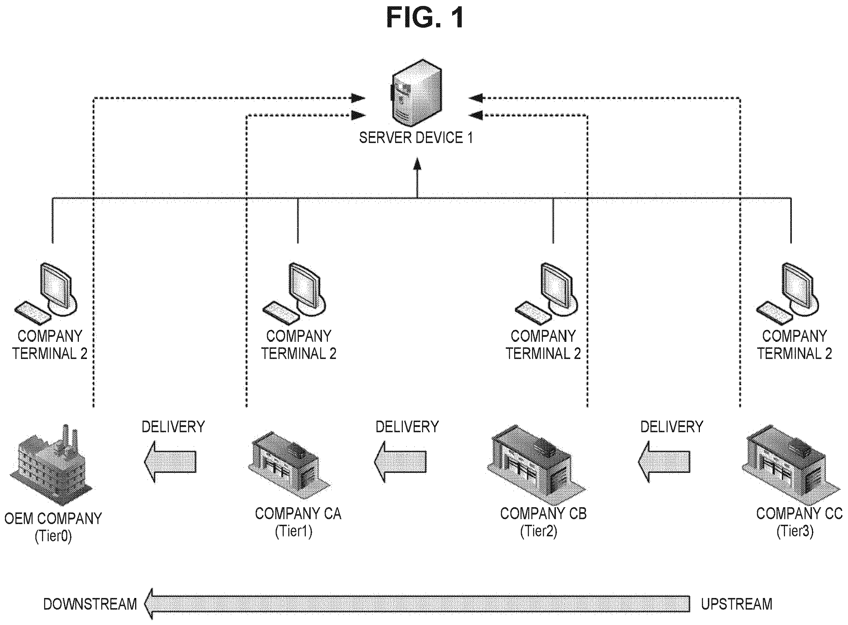

First, the structure of the supply chain will be described. FIG. 1 is a diagram illustrating an example of the supply chain according to the present embodiment. The supply chain illustrated in FIG. 1 is composed of an OEM company and a plurality of supplier companies. The example in FIG. 1 assumes a supply chain that manufactures products related to cars, such as cars themselves and batteries. The OEM company assembles the final products. The supplier companies (companies CA to CC) supply parts, materials, assemblies, or the like for manufacturing the final product. Each of the supplier companies produces one or more products and delivers the products to a company located one tier below themselves. This is repeated by the companies, and the final product is obtained in the final process (that is, by the OEM company).

In the present embodiment, in each level of the supply chain, the side that delivers products is referred to as the upstream side, and the side that purchases the products and produces new products is referred to as the downstream side. In this specification, companies located on the upstream side are referred to as upstream companies, and companies located on the downstream side are referred to as downstream companies. Further, products produced by upstream companies are referred to as upstream products, and products produced by downstream companies are referred to as downstream products. The downstream products includes the upstream products. Further, in the present embodiment, a level included in the supply chain is referred to as a tier. Tier0 is the lowest level (corresponding to an OEM company) that assembles the final product, and as the levels progress through Tiers 1, 2, 3, the level moves to the upstream side. Depending on the level of focus, downstream companies may become upstream companies. For example, a company CB located in Tier2 is a downstream company in relation to Tier3, but is an upstream company in relation to Tier1. In this way, the definitions of upstream and downstream companies can change at each level.

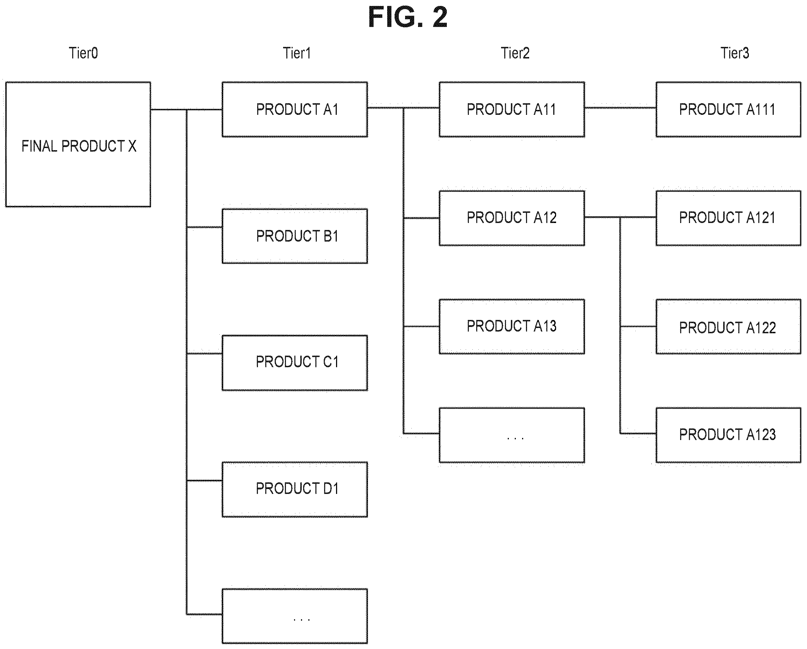

FIG. 2 is a diagram illustrating a relationship between products supplied by the supply chain. Here, the supply relationship of a plurality of products constituting a final product X is represented by a tree diagram. In this example, the final product X is produced by assembling products A1, B1, C1, D1, .... The Product A1 is produced by assembling products A11, A12, A13, .... In this way, the relationship between the products that constitute the final product can be represented by a tree diagram in which each product is a node.

Hereinafter, a tree diagram related to a specific final product will be referred to as a product tree.

A server device 1 according to the present embodiment collects information on products produced by each company (hereinafter referred to as product information) and information for linking relationships between pieces of the product information from a terminal (company terminal 2) corresponding to each company, and generates such a product tree based on these. Further, the product information includes information on traceability (for example, information on the amount of greenhouse gases emitted during the production of a product, hereinafter referred to as traceability-related information), and by using this, traceability-related processing can be performed.

As illustrated in FIG. 1, the information processing system according to the present embodiment includes the server device 1 and a plurality of the company terminals 2.

The company terminal 2 is a terminal corresponding to each of a plurality of companies that constitute a supply chain. The number of terminals corresponding to each company may be arbitrary. Further, the terminal corresponding to a target company may include a terminal of a company (for example, an agency company) that performs operations related to the target company.

The server device 1 collects information for generating a product tree from each of the company terminals 2, and generates the product tree based on the collected information. Further, the server device 1 can execute processing related to traceability (typically, processing to calculate the total carbon dioxide emission amount, and the like) based on the generated product tree. Further, the execution results of the processing can be transmitted to the company terminal 2.

Further, as illustrated by the dotted line in FIG. 1, the server device 1 is connected to factories where a plurality of companies produces products, and can collect data (actual result data) on actual product production results. Further, traceability-related information included in product information can be updated using the actual result data. Thereby, the server device 1 can keep the stored traceability-related information up to date. Furthermore, calculations related to traceability can be repeatedly performed based on the latest traceability-related information.

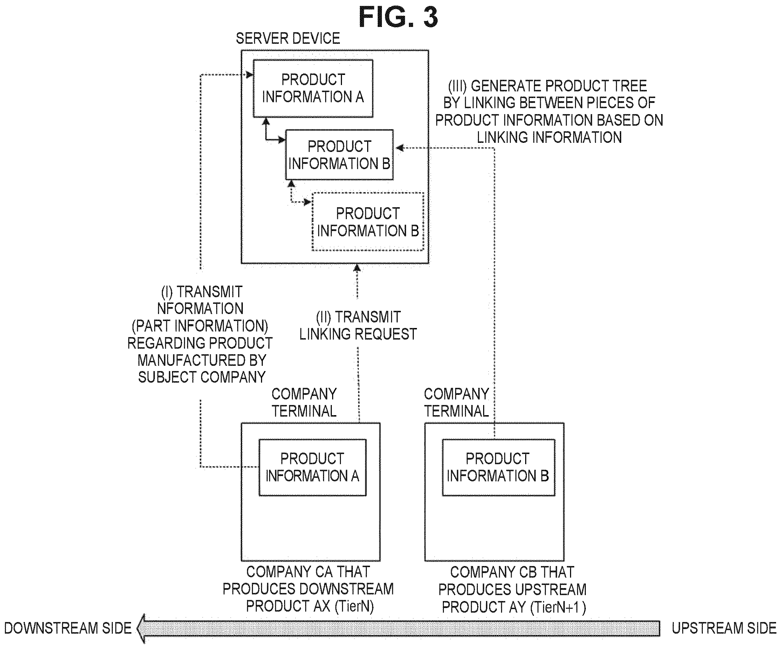

Next, an overview of processing by which the server device 1 generates a product tree will be described using FIG. 3. FIG. 3 is a diagram illustrating an overview of processing performed between the company terminal 2 and the server device 1. In the example of FIG. 3, it is assumed that a downstream company, a company CA, and an upstream company, a company CB, exist in any level. It is assumed that the company CB produces a product AY and delivers it to the company CA, and the company CA uses the product AY to produce a product AX. That is, in the example of FIG. 3, the product AY becomes a child node of the product AX on the product tree.

The company terminal 2 corresponding to each company transmits information (product information) on a product produced by the company to the server device 1. In this example, the company terminal 2 corresponding to the company CA transmits product information (referred to as product information A) on the product AX to the server device 1. Similarly, the company terminal 2 corresponding to the company CB transmits product information (referred to as product information B) on the product AY to the server device 1. Product information of each company is stored in the server device 1.

In order to generate a product tree and perform traceability-related processing (for example, processing to calculate a $CO_2$ emission amount) based on the generated product tree, the server device 1 needs to link pieces of the product information stored in the server device 1 with each other. Linking refers to associating supply relationships between products.

In the illustrated example, the product AX is produced using the product AY. That is, since there is a supply relationship between the product AX and product AY, the product information A and the product information B are to be linked.

By repeating this processing for all companies, the server device 1 can generate a product tree. Further, the server device 1 becomes able to perform arithmetic processing related to traceability.

Linking can be performed based on requests from downstream companies. This request is referred to as a linking request.

For example, the linking request may include an identifier of a downstream product as a linking target. The server device 1 that has received the linking request may transmit a request to the upstream company, and have the upstream company respond with products that are linked to the product related to the linking request.

The server device 1 can link pieces of product information (that is, the product information A and the product information B) with each other based on this information.

Hardware Configuration

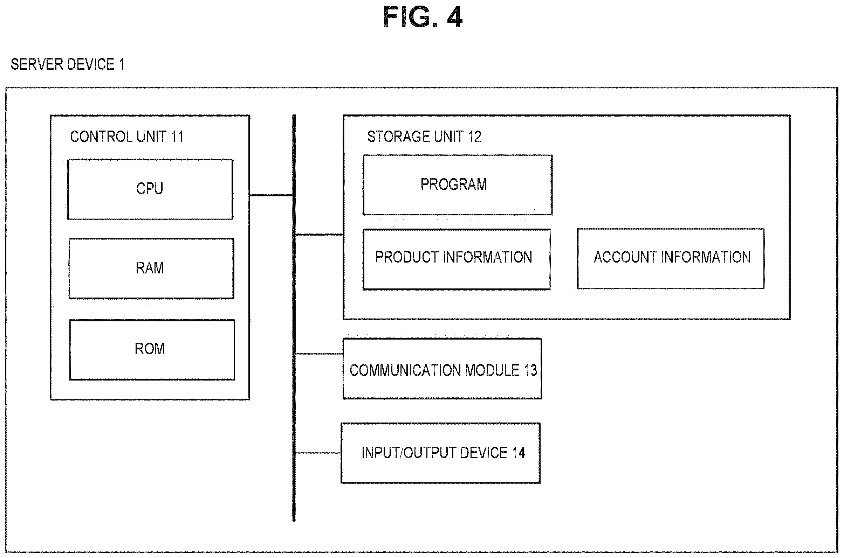

Next, the hardware configuration of each device constituting the system will be described. FIG. 4 is a diagram schematically illustrating an example of the hardware configuration of the server device 1 according to the present embodiment. The server device 1 is configured as a computer having a control unit 11, a storage unit 12, a communication module 13, and an input/output device 14.

The server device 1 can be configured as a computer having a processor (CPU, GPU, and the like), a main storage device (RAM, ROM, and the like), and an auxiliary storage device (EPROM, hard disk drive, removable media, and the like). The auxiliary storage device stores an operating system (OS), various programs, various tables, and the like, and by executing the programs stored therein, it is possible to realize each function (software module) meeting a predetermined purpose as described below. However, some or all of the functions may be realized as a hardware module by a hardware circuit such as an ASIC or an FPGA.

The control unit 11 is an arithmetic unit that realizes various functions of the server device 1 by executing a predetermined program. The control unit 11 can be realized, for example, by a hardware processor such as a CPU. Further, the control unit 11 may include a RAM, a read only memory (ROM), a cache memory, and the like.

The storage unit 12 is a medium that stores information, and is composed of a storage medium such as a RAM, a magnetic disk, or a flash memory. The storage unit 12 stores a program executed by the control unit 11, data used by the program, and the like.

Further, a database is constructed in the storage unit 12, and product information collected from the company terminals 2 and account information on companies are stored in the database. Details will be described below.

The communication module 13 is a communication interface for connecting the server device 1 to a network. The communication module 13 may be configured to include, for example, a network interface board, a wireless communication interface for wireless communication, and the like. The server device 1 can perform data communication with other computers (for example, each company terminal 2) via the communication module 13.

The input/output device 14 is a device that receives an input operation performed by an operator and presents information to the operator. Specifically, the input/output device 14 includes a device for input such as a mouse and a keyboard, and a device for output such as a display and a speaker. The input/output device may be integrally configured with, for example, a touch panel display.

In the specific hardware configuration of the server device 1, components can be omitted, replaced, or added as appropriate depending on the embodiment. For example, the control unit 11 may include a plurality of hardware processors. The hardware processor may be composed of a microprocessor, a FPGA, a GPU, or the like. The input/output device 14 may be omitted, or an input/output device (for example, an optical drive or the like) other than the exemplified one may be added. Further, the server device 1 may be configured by a plurality of computers. In this case, the hardware configurations of the computers may or may not match.

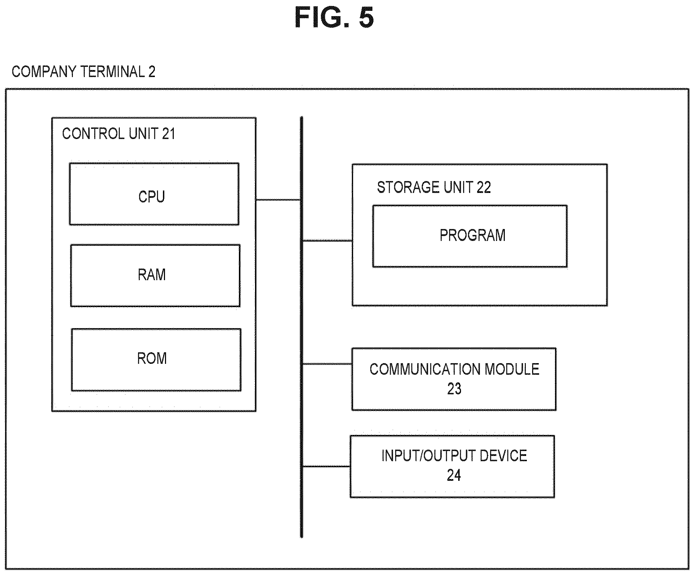

FIG. 5 is a diagram schematically illustrating an example of the hardware configuration of the company terminal 2 according to the present embodiment. The company terminal 2 is configured as a computer having a control unit 21, a storage unit 22, a communication module 23, and an input/output device 24.

Similar to the server device 1, the company terminal 2 can be configured as a computer having a processor (CPU, GPU, or the like), a main storage device (RAM, ROM, or the like), and an auxiliary storage device (EPROM, hard disk drive, removable media, and the like). However, some or all of the functions (software modules) may be realized as a hardware module by, for example, a hardware circuit such as an ASIC or an FPGA.

The control unit 21 is an arithmetic unit that realizes various functions (software modules) of the company terminal 2 by executing a predetermined program. The control unit 21 can be realized, for example, by a hardware processor such as a CPU. Further, the control unit 21 may include a RAM, a read only memory (ROM), a cache memory, and the like.

The storage unit 22 is a medium that stores information, and is composed of a storage medium such as a RAM, a magnetic disk, or a flash memory. The storage unit 22 stores a program executed by the control unit 21, data used by the program, and the like.

The communication module 23 is a communication interface for connecting the company terminal 2 to the network. The communication module 23 may be configured to include, for example, a network interface board, a wireless communication interface for wireless communication, and the like. The company terminal 2 can perform data communication with other computers (for example, the server device 1) via the communication module 23.

The input/output device 24 is a device that accepts input operations performed by the operator and presents information to the operator. Specifically, the input/output device 24 includes a device for input such as a mouse and a keyboard, and a device for output such as a display and a speaker. The input/output device may be integrally configured with, for example, a touch panel display.

In the specific hardware configuration of the company terminal 2, similar to the server device 1, components can be omitted, replaced, or added as appropriate depending on the embodiment.

Software Configuration

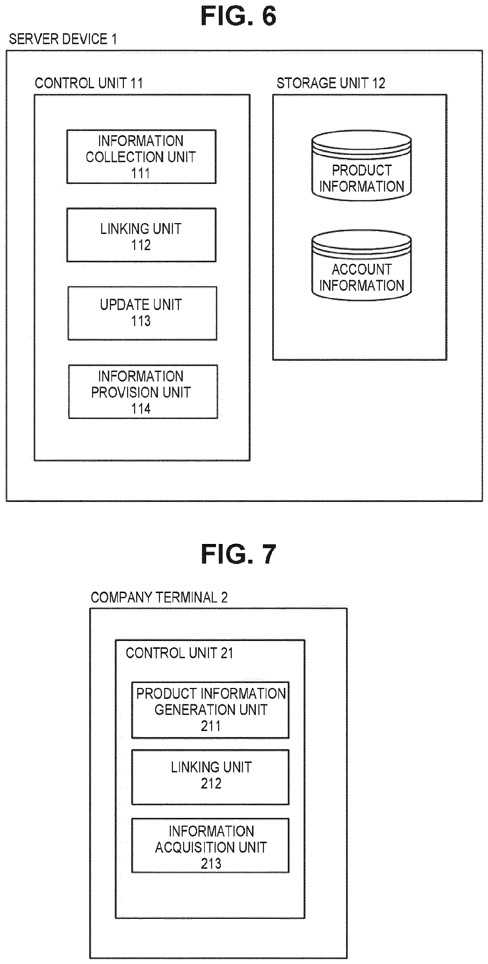

Next, the software configuration of each device constituting the system will be described. FIG. 6 is a diagram schematically illustrating the software configuration of the server device 1 according to the present embodiment. In the present embodiment, the control unit 11 includes four software modules: an information collection unit 111, a linking unit 112, an update unit 113, and an information provision unit 114. Each software module may be realized by executing a program stored in the storage unit 12 by the control unit 11 (CPU). The information processing executed by the information collection unit 111, the linking unit 112, the update unit 113, and the information provision unit 114 described below is synonymous with the information processing executed by the control unit 11.

The information collection unit 111 is configured to receive product information transmitted from the company terminal 2 and execute processing of storing the product information in the storage unit 12.

The linking unit 112 is configured to acquire information for linking pieces of product information from the company terminal 2 by interacting with the company terminal 2. Further, the linking unit 112 is configured to execute processing that writes information representing a linking relationship to the product information stored in the storage unit 12 based on the information acquired from the company terminal 2.

The update unit 113 is configured to collect actual result data related to actual product production results from factories that produce products at each company, and then the update unit 113 is configured to update traceability-related information included in the stored product information based on the actual result data.

Further, when collection of actual result data for a certain company fails, the update unit 113 generates data (alternative data) to replace the actual result data, and updates traceability-related information based on the alternative data. The detailed method will be described below.

The information provision unit 114 is configured to execute information processing related to the product tree and output the results of executing the information processing. The information processing related to the product tree may include processing that performs traceability-related calculations on the product tree. Outputting the results of executing the information processing may include processing for providing information on the generated product tree to the company terminal 2. In one example, the information provision unit 114 is configured to generate information on the product tree and output the information on the generated product tree.

The storage unit 12 stores product information transmitted from the company terminal 2, and account information. In the present embodiment, the operator of each company logs into the server device 1 via the company terminal 2 using the account of the corresponding company, and thereby the interaction between the server device 1 and the company terminal 2 is performed. Account information is information on accounts corresponding to each company constituting the supply chain. Logging in using an account is an example of accessing the server device 1 as a corresponding company. However, the method of accessing the server device 1 may not be limited to this example, and may be selected as appropriate depending on the embodiment.

FIG. 7 is a diagram schematically illustrating the software configuration of the company terminal 2 according to the present embodiment. In the present embodiment, the control unit 21 includes three software modules, which are a product information generation unit 211, a linking unit 212, and an information acquisition unit 213. Each software module may be realized by the control unit 21 (CPU) executing a program stored in the storage unit 22. The information processing executed by the product information generation unit 211, linking unit 212, and information acquisition unit 213 described below is synonymous with the information processing executed by the control unit 21.

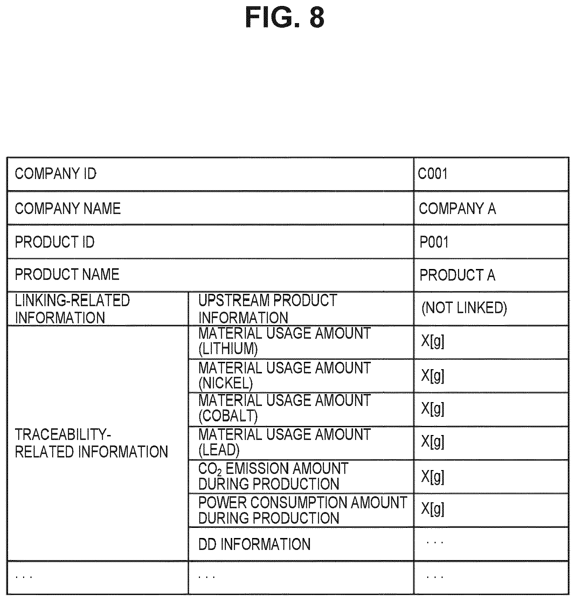

The product information generation unit 211 is configured to generate information (product information) on the product of the company corresponding to the company terminal 2. FIG. 8 is an example of product information generated by the product information generation unit 211. Product information may be input via an operator of the device. In the present embodiment, the product information includes fields of company ID, company name, product ID, and product name. The company ID and company name are the identifier and name of the company (that is, the company that uses the company terminal 2) that produces a target product. The product ID and product name are the identifier and name of the target product.

Further, the product information is configured to include linking-related information. The linking-related information is information used to identify the upstream product linked to the target product. In the present embodiment, the linking-related information includes a field of "upstream product information".

The upstream product information field is configured to store information used to identify product information corresponding to an upstream product (in other words, a product that is necessary to produce the target product and is included in the target product) linked to the target product. The upstream product information field is used when the server device 1 links products. Basically, at the stage when the product information is generated, the target product is not linked to the upstream product, so the upstream product information field does not need to store a value indicating the upstream product.

Further, the product information is configured to include traceability-related information. In one example, traceability-related information may include the amount of materials (for example, upstream products) used per unit of produced product, information regarding the recycling rate of a predetermined raw material, the amount of greenhouse gas emitted during product production, due diligence-related information, or a combination thereof. The predetermined raw material may be, for example, lithium, nickel, cobalt, lead, graphite, and the like. The recycling rate may be expressed directly or indirectly, such as by a combination of the total usage amount and the recycled material usage amount.

In the following description, the traceability-related information includes values used to track carbon footprints, and these values are referred to as CFP values.

These values correspond to the process of producing the target product. For example, in the case of the example illustrated in FIG. 3, the traceability-related information included in the product information A stores the amount of greenhouse gases emitted in the production activities of the product AX, and the like. The traceability-related information included in the product information A does not include information (for example, the amount of greenhouse gases emitted until the upstream product AY is produced) on the process until an upstream product is produced.

The traceability-related information may be selected as appropriate depending on the embodiment. In one example, a greenhouse gas emission amount (carbon footprint) may include Scope 1, Scope 2, and Scope 3 emission amounts. Scope 1 may be direct greenhouse gas emission amounts. Scope 2 may be indirect emission amounts associated with the use of electricity, heat and steam supplied by other companies. Scope 3 may be indirect emission amounts other than Scope 1 and Scope 2. In addition, in one example, due diligence-related information may be a technical document that indicates, with respect to a product containing the target raw materials (for example, cobalt, natural graphite, lithium, nickel, and the like), the amount of the raw material contained within the product, and whether the smelter or the like has fulfilled its obligations for responsible mineral procurement. In another example, the due diligence-related information may include a score indicating the degree to which the above-described obligations are met.

The product information generation unit 211 is configured to acquire such information via the operator of the company terminal 2 and transmit it to the server device 1 at an arbitrary timing.

The linking unit 212 is configured to transmit a link request requesting the server device 1 to link the subject company's product information transmitted to the server device 1 with an upstream product to the server device 1.

As described with reference to FIG. 3, the server device 1 executes linking between pieces of product information in response to the linking request. The linking unit 212 generates this linking request and transmits it to the server device 1.

The linking unit 212 may transmit a linking request including the company ID and product ID of the subject company to the server device 1. The product ID is the identifier of the subject company's product to be linked. The linking request can also be said to be a request for causing the server device 1 to link the product AX, which is the subject company's product, with an upstream product (product AY in this example) corresponding to the product AX.

The server device 1 that has received the linking request interacts with the company terminal 2 of the upstream company and executes linking between pieces of product information.

The operation of the linking unit 212 is described above when the company using the company terminal 2 is a downstream company. However, when the company using the company terminal 2 is an upstream company, the linking unit 212 may perform processing of providing information in response to a linking request transmitted from a downstream company.

For example, the linking unit 212 may respond with the subject company's products that have a supply relationship with the designated product (product designated by the downstream company and related to the linking request) based on a request from the server device 1 that received the linking request. Thereby, the server device 1 can specify the downstream product and upstream product that are linked to each other. In this way, the linking unit 212 provides data for linking the designated downstream product and upstream product to the server device 1 based on the request from the server device 1 that has received the linking request, and causes the server device 1 to link pieces of product information with each other. This allows the server device 1 to determine the state of the product tree.

The information acquisition unit 213 is configured to request the server device 1 to provide the product tree (and accompanying information) and output the information transmitted from the server device 1.

Details of Processing

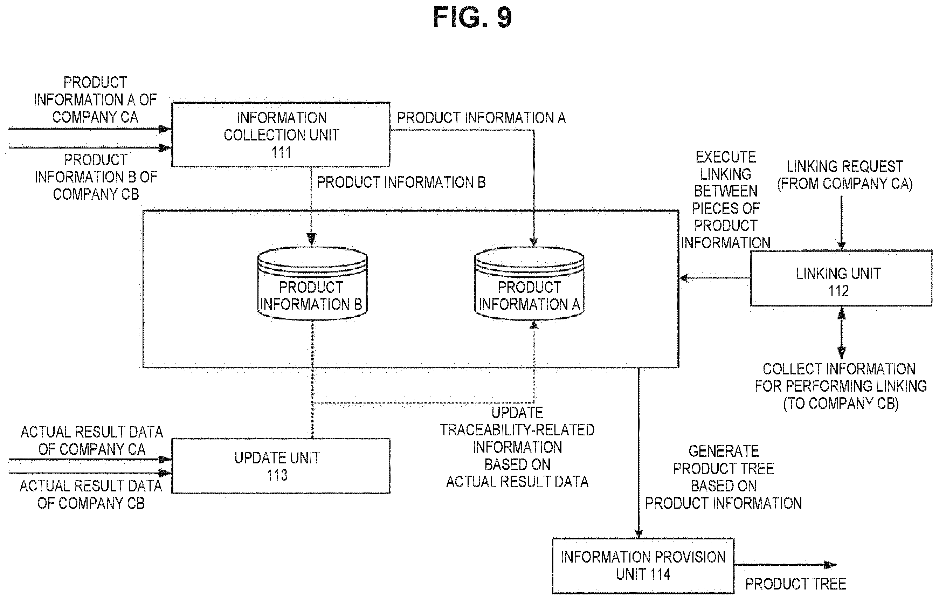

Next, the specific contents of the processing performed by the server device 1 and the company terminal 2 will be described. FIG. 9 is a diagram illustrating an example of the flow of processing executed by the server device 1 based on a request from the company terminal 2. The processing performed by the server device 1 can be roughly divided into the following five types.

(1) Processing of receiving product information transmitted from each company terminal 2 of a plurality of companies included in the supply chain and storing the received product information
(2) Processing of receiving a linking request transmitted from a company terminal 2 of a downstream company
(3) Processing of interacting with a company terminal 2, which is an upstream company, in response to a linking request, and linking pieces of product information to each other based on the result.
(4) Processing to generate and provide information regarding the product tree based on the result of linking
(5) Processing to collect actual result data and update stored product information

In the example of FIG. 9, the company CA is assumed to be a downstream company, and the company CB is assumed to be an upstream company. In addition, the product produced by the company CA is set as a product AX, and the product produced by the company CB is set as a product AY. Further, product information corresponding to the product AX is set as product information A, and product information corresponding to the product AY is set as product information B.

First, the information collection unit 111 of the server device 1 acquires product information from the product information generation unit 211 of the company terminal 2. In the example of FIG. 9, the server device 1 acquires product information A from the company terminal 2 corresponding to the company CA, and acquires the product information B from the company terminal 2 corresponding to the company CB. Product information is stored in the storage unit 12.

Next, the linking unit 112 of the server device 1 receives a linking request from the company terminal 2. The linking request is transmitted from the company terminal 2 of the downstream company. In the example of FIG. 9, it is assumed that the company terminal 2 of the company CA has transmitted the linking request. The linking request includes the company ID and the product ID of the target product.

Next, the linking unit 112 of the server device 1 links pieces of the product information based on the received linking request.

The linking unit 112 transmits the product ID of the target product included in the linking request to the company terminal 2 of the upstream company, and causes the company terminal 2 of the upstream company to respond with the upstream product that has a supply relationship with the product.

The company terminal 2 (linking unit 212) of the upstream company allows the operator to select the product to be linked. In this example, the product AX and the product AY are linked to each other. For example, the operator inputs information indicating that the upstream product for the product AX is the product AY via the input/output device 24.

The information acquisition unit 213 transmits data (linking data) used to associate the upstream product (product AY) and the downstream product (product AX) with each other to the linking unit 112.

As described with reference to FIG. 8, the product information is provided with a field (linking-related information) related to the product that becomes a linking target. The linking unit 112 stores information corresponding to the product information B (that is, the upstream product) in the linking-related information included in the product information A, based on the linking data described above. For example, the linking-related information includes an identifier of an upstream product, an identifier of a company that produces the upstream product, and the like. The linking-related information may include a pointer to product information as a linking target.

Through the processing described above, a part of a tree structure is formed in which the product information of the downstream product is a parent node and the product information of the upstream product is a child node.

When the linking of pieces of product information is completed, the update unit 113 starts processing to collect actual result data related to the actual product production results from factories, or the like, that produce products at each company. Collection of the actual result data can be executed at predetermined intervals. Further, the update unit 113 updates traceability-related information included in the stored product information based on the collected actual result data.

For example, in the example of FIG. 8, the update unit 113 collects actual result data from a plurality of companies, including CFP values such as the amount of $CO_2$ emitted when producing products and the amount of power consumed, and reflects the latest actual result data in the traceability-related information included in the product information. The actual result data is acquired from a server device (for example, a server device that manages the production process in a factory that produces the product) belonging to a company corresponding to each piece of stored product information. The actual result data collected at a predetermined time may be overwritten on the product information or may be saved in a separate area as a history.

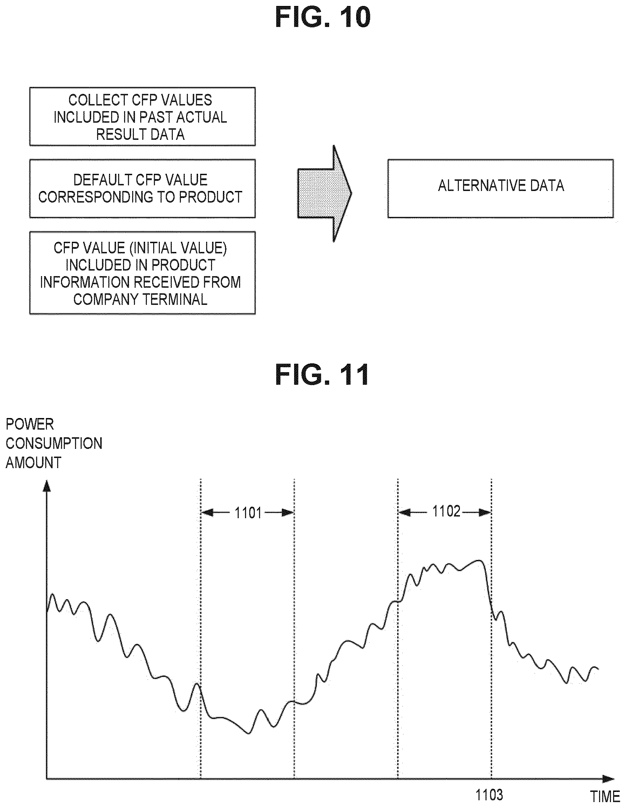

There may be cases where actual result data collection fails due to server failure, communication line failure, or the like. In such a case, the update unit 113 generates alternative data for the target product, and updates traceability-related information included in the product information using the generated alternative data. In the present embodiment, the update unit 113 can generate alternative data using the following three methods. FIG. 10 is a diagram illustrating methods that generates alternative data.

(Method 1) Method of generating alternative data using CFP values included in collected past actual result data
(Method 2) Method of generating alternative data using inventory data set in advance for the target product
(Method 3) Method of generating alternative data using the initial value of the CFP value included in the product information received from the target company

Method 1 is a method of generating alternative data using CFP values included in actual result data collected in the past. For example, when a plurality of pieces of actual result data collected in the past for the target product is stored in the storage unit 12, the CFP value included in the past actual result data is acquired and replaced with the actual result data that failed to be collected. When the target CFP value has been collected multiple times in the past, the average value may be calculated, or a weighted average may be taken after weighting according to the elapsed time.

Method 2 is a method of generating alternative data using inventory data corresponding to the target product. For example, a default value of the CFP value is stored in advance in the storage unit 12 for each product, and processing is performed in which the acquired default value is replaced with the actual result data. The default value of the CFP value may be defined for each product, or may be defined according to the product category, product characteristics, product production scale, company category, or the like.

Method 3 is a method of generating alternative data using the CFP value (initial value) included in the product information received from the company. As illustrated in FIG. 8, the product information received from the company terminal 2 includes initial values of traceability-related information. Therefore, alternative data can be generated using these values.

The update unit 113 can generate alternative data using any of the three methods described above.

The method used to generate the alternative data may be determined based on the past fluctuation amount of the CFP value included in the actual result data. For example, when the fluctuation range (fluctuation rate) of the CFP value during a first period in the past is equal to or greater than a predetermined value, using the CFP value collected in the past may result in a large deviation from the actual value. In such a case, it is preferable to use Methods 2 and 3 instead of Method 1. Method 3 may be used preferentially, and Method 2 may be used when Method 3 cannot be used.

When using Method 1, it is necessary to determine a past period (hereinafter referred to as an acquisition target period) that acquires an alternative CFP value. The acquisition target period may be a fixed period, but when there is a certain regularity in the fluctuation of the CFP value, the acquisition target period may be determined based on the rule. For example, as illustrated in FIG. 11, consider a case where the CFP value (for example, power consumption amount) fluctuates depending on the time of day. In this case, for example, it is not preferable to replace the data generated in the time period indicated by reference numeral 1101 in the time period indicated by reference numeral 1102. In this case, for example, it is preferable to acquire an alternative CFP value from the same time period as the target time period. Although time periods are illustrated in this example, when the CFP value fluctuates depending on the season, the acquisition target period may be set in consideration of the season.

In addition, in the example, the case where the fluctuation of the CFP value has a certain regularity is illustrated, but when there is no regularity in the fluctuation of the CFP value, a period in which the fluctuation in the CFP value is smaller may be determined, and this period may be set as the acquisition target period. For example, when the actual result data could not be acquired at the time of reference numeral 1103 in FIG. 11, it is also possible to look at before that time and find a period (for example, reference numeral 1102) in which the fluctuation range (fluctuation rate) of the CFP value is equal to or less than a predetermined value, and use this period as the acquisition target period.

In addition to this, the update unit 113 may decide which of Methods 1 to 3 to use depending on the characteristics of the target product, materials used in the target product, production scale of the target product, characteristics of the company producing the target product, and the like.

Returning to FIG. 9, the description will be continued.

The information provision unit 114 of the server device 1 generates information on the product tree based on the stored product information, and outputs the information on the product tree. Generating information on the product tree refers to processing of generating various types of information (for example, information on traceability, an image illustrating link relationships between products using a tree diagram, or the like) on a product after links between nodes are formed by linking pieces of the product information. This processing of generating information on the product tree is an example of information processing regarding the product tree. In order to generate information on the product tree, all linking between pieces of product information must be completed. The information provision unit 114 can appropriately generate the information when such conditions are satisfied.

As described with reference to FIG. 2, the product tree in the present embodiment is a tree diagram representing the supply relationship between pieces of product information in the supply chain. The information provision unit 114 can generate an image representing a tree diagram based on the product information.

Furthermore, when generating information on the product tree, the information provision unit 114 integrates the CFP values defined for each piece of product information and outputs the result.

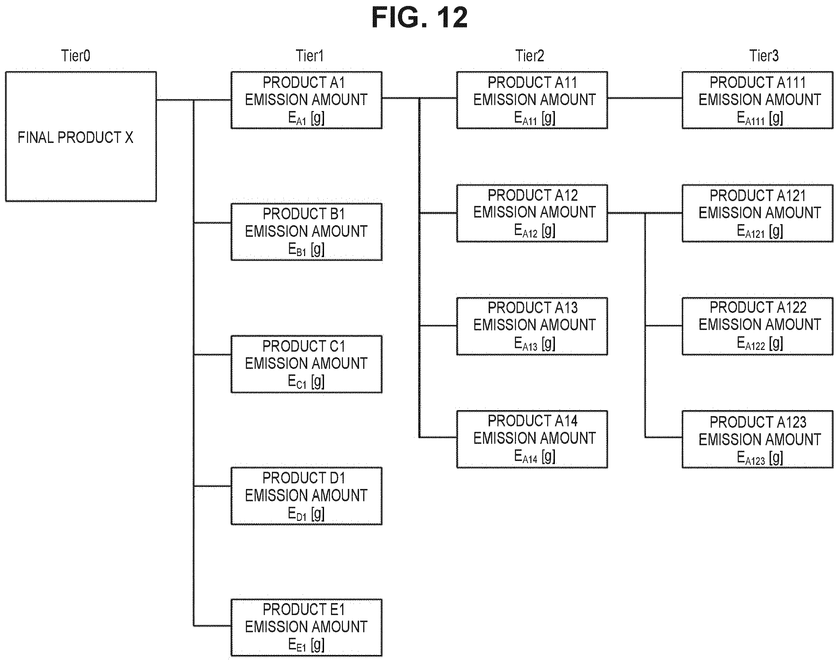

Here, integration of traceability-related information (the CFP value) will be described using FIG. 12. FIG. 12 is a diagram illustrating a plurality of products constituting the final product X and the amount of carbon dioxide ($CO_2$) emitted in each process of producing these products. For example, it is assumed that $E_{A12}$ [g] of carbon dioxide is emitted in the process of producing a product A12 in the figure. Further, it is assumed that the product is composed of three upstream products A121 to A123. In this way, upstream products included in a certain product are also referred to as "included products". Here, the total amount of carbon dioxide emitted until a certain target product is produced can be obtained by repeating the processing of passing on the $CO_2$ emission amount associated with upstream products to downstream products while referring to product information between companies in each of two adjacent levels, from the most upstream product that is a leaf node to the product.

In the example of FIG. 12, when the target product is A12, by summing the $CO_2$ emission amounts corresponding to the included products (upstream products A121 to A123) and the $CO_2$ emission amounts corresponding to the product A12, the total amount of carbon dioxide emitted until the product A12 is produced can be calculated. That is, the integrated $CO_2$ emission amount for the product A11 is as follows.

$$I_{A12} = E_{A12} + E_{A121} \times U_{A121} + E_{A122} \times U_{A122} + E_{A123} \times U_{A123} \text{ [g]}$$

Here, $E_{A121}$, $E_{A122}$, $E_{A123}$ are respectively $CO_2$ emission amounts per unit amount when producing products A121, A122, A123. Further, $U_{A121}$, $U_{A122}$, $U_{A123}$ are respectively the usage amounts of the products A121, A122, A123, used for producing the product A12. This usage amount is an example of the amount of material used per product production amount, which is included in the traceability-related information. The $CO_2$ emission amount of the final product (the product of the most downstream company) can be obtained by sequentially executing the above-described calculations from the product of the most upstream company to the final product.

The integrated CFP value may be stored in the storage unit 12 separately from the product information, or may be included as part of the product information. That is, the product information corresponding to the product A12 may hold both $E_{A12}$, which is the emission amount in a single process, and $I_{A12}$, which is the emission amount after integration.

The CFP value after integration is used again when performing integration for downstream products. By executing this processing at each level starting from the most upstream, the CFP value (for example, the cumulative value of $CO_2$ emission amounts) is successively passed on downstream. Finally, by passing the CFP value on the final product, it is possible to obtain the CFP value (for example, the total amount of $CO_2$ emissions) corresponding to the entire period until the final product is produced.

In this way, when generating information on the product tree, the information provision unit 114 repeatedly executes processing of sequentially integrating CFP values included in each piece of product information from the most upstream to the most downstream. In the above-described example, carbon dioxide emission amounts are exemplified as a target of integration, but the traceability-related information that is a target of integration may be a recycling rate regarding a predetermined raw material, a score regarding due diligence, or the like. In addition, when the traceability-related information is numerical, the integration may be performed by numerical calculations, or when the traceability-related information is information (for example, due diligence-related information, or the like) other than numerical values, the integration may be simply information collection.

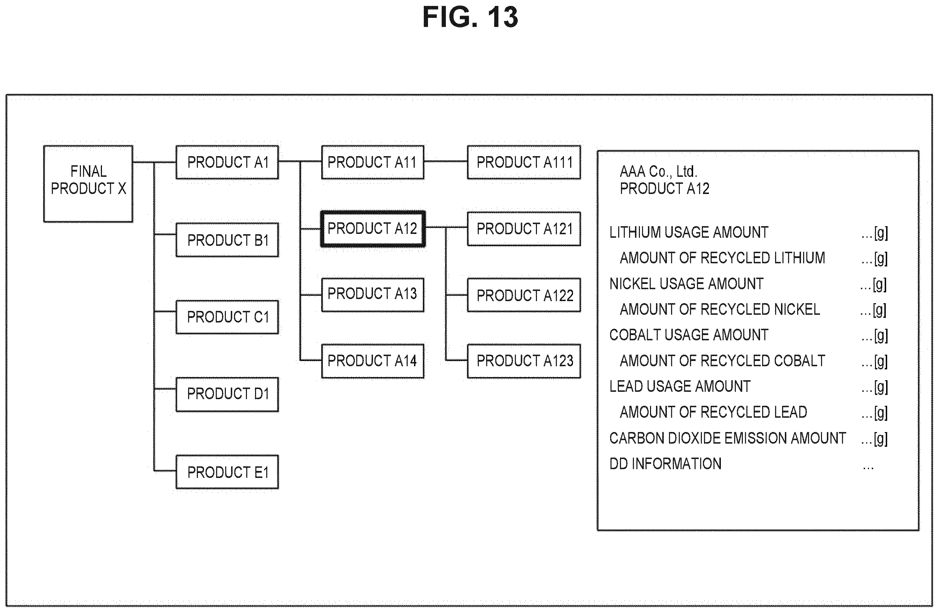

The information provision unit 114 may output the generated product tree in an image format. In addition, at the same time, traceability-related information corresponding to any product may be output. FIG. 13 is an example of a screen outputting a product tree as an image. The illustrated screen includes an image illustrating the supply relationship of a plurality of products that constitutes the final product using a tree diagram. Further, by selecting any product, it is possible to view integrated results (for example, total value of carbon dioxide emission amounts from the most upstream) of traceability-related information corresponding to the product or traceability-related information corresponding to the entire period until the product is produced. Such information can be outputted via the input/output device 14 of the server device 1 based on the operation of the operator of the server device 1.

Further, the information provision unit 114 may provide the generated product tree to the company terminal 2 in response to a request from the company terminal 2 (information acquisition unit 213). It may not be appropriate to disclose the entire product tree to a specific company. Therefore, when the information provision unit 114 provides a product tree to the company terminal 2 corresponding to a certain company, the information provision unit 114 may perform processing of not disclosing the range for which the company does not have access authority.

For example, a company included in a supply chain may want to keep the subject company's product information secret from other companies. To enable this, access authority to the product information may be granted between companies. For example, a rule may be set such as "only adjacent companies are granted access authority to the subject company's product information", and the server device 1 may disclose the product tree in accordance with the rule.

Access authority to specific product information may be set by the upstream company at the time the upstream company responds to a linking request transmitted from the downstream company. In this case, the server device 1 may decide which information to disclose to which company based on information on access authority transmitted from the upstream company.

For example, in the example of FIG. 12, it is assumed that the information provision unit 114 receives a request to disclose a product tree from the company terminal 2 corresponding to the company that produces the product A12. Here, it is assumed that the company has been granted access authority only for the products A121, A122, A123. That is, the company cannot access product information other than the three products and the downstream product A1. In this case, the information provision unit 114 provides the company terminal 2 with a product tree that does not disclose information about products to which the company does not have access authority.

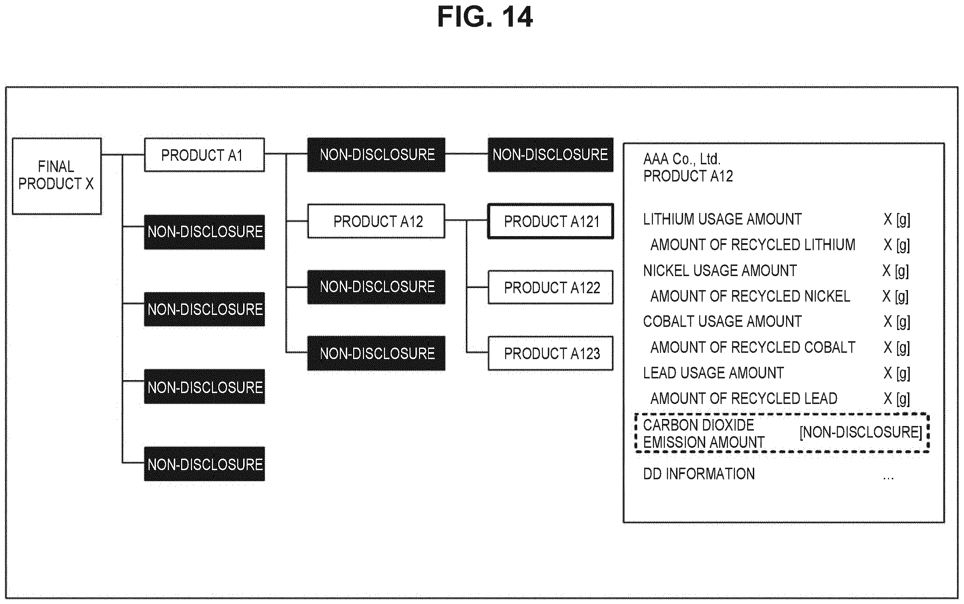

FIG. 14 is an example of a product tree in the case where products to which the company does not have access authority are not disclosed. In this example, for products that are not disclosed, the product tree is displayed with detailed information (or the existence itself) kept secret.

In addition, in cases where the existence of a product is disclosed, but access authority is not granted for specific items in the corresponding product information, as indicated by the dotted line in the figure, the concealment processing is performed only on the specific item. In the illustrated example, it is shown that the emission amount of carbon dioxide emitted when producing the product A121 is not disclosed.

On the other hand, even when there are products (or items) in the tree that the company does not have access authority for, the above-described integration of traceability-related information is executed without being affected by this. For example, in the illustrated example, the carbon dioxide emission amount for the product A121 is not disclosed, but this does not affect the processing of calculating the total carbon dioxide emission amounts for the product A12.

The information provision unit 114 may generate a product tree that has not been subjected to concealment processing, and then perform concealment processing for each company based on the access authority granted to each company. Alternatively, the information provision unit 114 may generate the product tree using the access authority of the company. For example, when a product tree is requested by the company CA, the information provision unit 114 may extract one or more pieces of product information that the company CA is permitted to access and generate the product tree.

Processing Flow

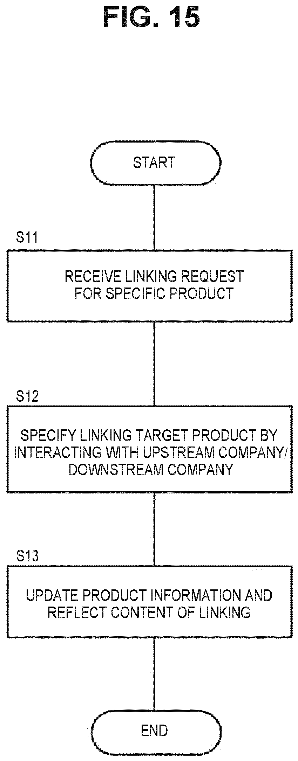

Next, the flow of processing executed by the server device 1 will be described with reference to FIGS. 15 to 17.

FIG. 15 is a flowchart of processing of acquiring product information from a plurality of company terminals 2 and linking pieces of the product information.

In one example, the interaction between the server device 1 and the company terminal 2 is initiated by each company's operator logging into the server device 1 via the company terminal 2 using a corresponding company account. In this example, it is assumed that operators of each company are logging into the server device 1 using their company's accounts.

Here, the company terminal 2 used by the downstream company is called a company terminal 2A, and the company terminal 2 used by the upstream company is called a company terminal 2B.

In addition, before starting the illustrated processing, it is assumed that the product information generation unit 211 of each company terminal 2 acquires the subject company's product information via the operator and transmits the acquired product information to the server device 1. Product information transmitted to the server device 1 is received by the information collection unit 111 and stored in the storage unit 12.

In step S 11, the linking unit 212 of the company terminal 2A transmits data requesting the server device 1 to link the product information transmitted to the server device 1 with an upstream product (linking request). The linking request is received by the information collection unit 111 of the server device 1.

In step S12, the linking unit 112 of the server device 1 links pieces of the product information with each other in response to the received linking request.

In the present embodiment, the server device 1 that has received the linking request transmits a linking commission to the company terminal 2B belonging to the adjacent Tier based on the linking request. The linking commission is asking for the upstream company to respond with the upstream product that corresponds to the downstream product. The linking commission includes the product ID (that is, identifier of the downstream product) included in the linking request.

The company terminal 2B (information acquisition unit 213) that has received the linking commission selects the subject company's product that has a supply relationship with the designated product (product designated by the downstream company). In this step, the operator of the upstream company may designate a combination of a downstream product and an upstream product linked to the downstream product. The information acquisition unit 213 transmits an identifier of the product (downstream product) that is the linking source and an identifier of the upstream product that is the linking target to the server device 1 as a pair. Thereby, the server device 1 can specify the downstream product and upstream product that are linked to each other.

At this time, the response from the upstream company may be presented to the downstream company, and the operator of the downstream company may confirm the details of the linkage. Furthermore, when there is a plurality of products that is a candidate for linkage, options may be presented to the operator of the downstream company and the operator may select one.

Further, in this step, the upstream company may grant the downstream company access authority to the subject company's product information.

In step S13, the linking unit 112 of the server device 1 updates the stored product information based on the linking request and the response thereto to reflect the content of linking between pieces of the product information. Linking between pieces of the product information may be performed by storing information (identifier, pointer, or the like) regarding the upstream product in linking-related information included in the product information of the downstream product.

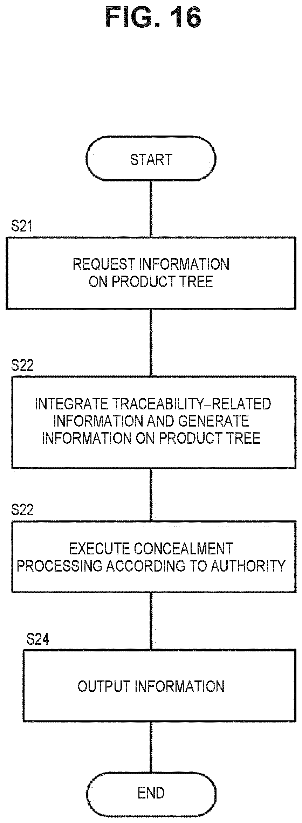

FIG. 16 is a flowchart of processing in which the server device 1 provides information on the product tree in response to a request from the company terminal 2.

First, in step S21, the server device 1 (information provision unit 114) receives an information provision request regarding the product tree from the company terminal 2 (information acquisition unit 213). The request includes, for example, the identifier of the target product. The target product may be a final product or a product (intermediate product) other than the final product.

The server device 1 (information provision unit 114) that received the request generates information on the product tree by the processing described above (step S22). In this case, the information provision unit 114 executes processing of integrating traceability-related information defined in each piece of product information from the most upstream to the most downstream. The results of the integration will be reflected in each piece of product information.

Next, in step S23, processing is executed to conceal information for which no access authority has been granted based on the access authority that the target company has. For example, when the existence of product information of other companies is not disclosed for a certain company, processing is executed to conceal the existence of the product information. Furthermore, when only a specific item included in the product information is not disclosed, processing is performed to conceal the contents of the item.

The information on the product tree subjected to the concealment processing is provided to the company terminal 2 (information acquisition unit 213) and output (step S24).

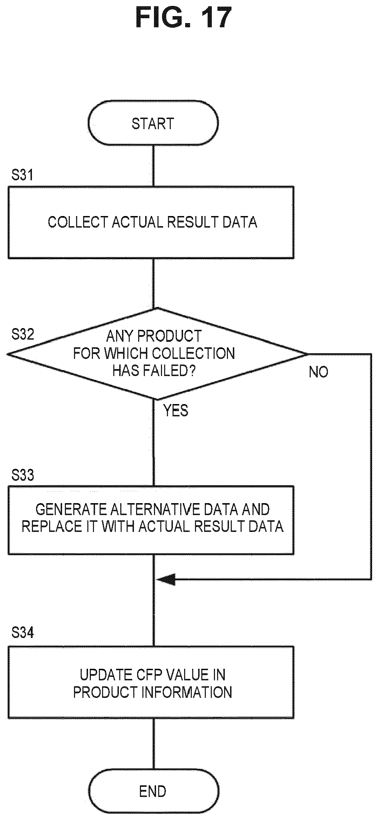

FIG. 17 is a flowchart of processing in which the update unit 113 of the server device 1 collects actual result data from the production sites of each company and updates traceability-related information included in product information. The illustrated processing is executed periodically by the update unit 113 after all product information has been collected and the product tree has been completed.

The processing in FIG. 17 may be executed for all products included in the product tree, or for some products. For example, when it is desired to calculate the latest traceability-related information for a final product, it is necessary to update the traceability-related information for all products included in the final product. On the other hand, when it is desired to calculate the latest traceability-related information for a product located in the middle of the product tree, it is necessary to update the traceability-related information for products located upstream of the product.

In this way, the products of which the traceability-related information is to be updated are selected as appropriate.

First, in step S31, actual result data is collected from a plurality of companies (for example, server devices that manage production sites) that produce the target product.

In step S32, it is determined whether there is any product for which collection of actual result data has failed. Here, when there is a product for which collection of actual result data has failed, the processing moves to step S33. When there is no product for which collection of actual result data has failed, the processing moves to step S34.

In step S33, alternative data that is an alternative to the actual result data is generated for the target product using one of the methods 1 to 3 described above. As described above, the alternative data can be generated using either the CFP value included in the target product's actual result data collected in the past, the default CFP value corresponding to the target product, or the CFP value included in the product information of the target product.

Next, in step S34, the traceability-related information (the CFP value) of the target product is updated using the actual result data or alternative data. In this step, processing that accumulates the history of past CFP values may be executed simultaneously.

At the time when this step is completed, processing (processing of step S22 described above) of integrating traceability-related information defined in a plurality of pieces of product information from the most upstream to the most downstream of the product tree may be executed.

As described above, in the present embodiment, the server device 1, which stores a plurality of pieces of product information included in the product tree, communicates with equipment related to the production of each product, and collects and updates the latest traceability-related information (the CFP value) related to the production of the target product. This makes it possible to keep the traceability-related information corresponding to the product tree up to date.

When integrating and outputting traceability-related information for all products included in a product tree, when collection of actual result data is delayed in some areas, there is a risk that information integration will also be delayed. However, when there is a product for which actual result data cannot be collected, the server device 1 according to the present embodiment updates traceability-related information by generating alternative data. This makes it possible to update traceability-related information for all products included in the product tree even when actual result data collection is delayed in some areas.

Modification Examples

The embodiments described above are merely examples, and the present disclosure may be implemented with appropriate changes within the scope of the gist thereof. For example, the processing and means described in the present disclosure can be implemented in any combination as long as no technical contradiction occurs.

Further, in the description of the embodiment, the server device 1 stores the product information in the database, but the product information may be stored in a medium other than the database.

In addition, in the description of the embodiment, although the alternative data generation method is determined based on the past fluctuation amount of the CFP value indicated by the actual result data, the alternative data generation method may be determined based on other requirements. For example, it may be determined which method to adopt based on the characteristics of the actual result data other than the fluctuation amount.

Further, in the description of the embodiment, the server device 1 links pieces of product information to each other in response to a linking request transmitted from the company terminal 2 of a downstream company. However, the linking between the pieces of the product information does not necessarily have to be executed using the linking request as a trigger. For example, linking between the pieces of the product information may be executed in advance based on a product list or the like acquired from an external source.

Furthermore, in the description of the embodiment, the linking request includes the identifier of the downstream product as a linking target, but the linking request may include the identifiers of both the downstream product as a linking target and the upstream product. When the product as a linking target can be specified by the downstream company (by product number, or the like), the downstream company can also designate the upstream product.

The server device 1 may interact with the upstream company in advance, acquire information designating upstream products that are permitted to be disclosed to the downstream company, and provide the downstream company with a list of upstream products that are permitted to be disclosed. Downstream companies can also generate combinations of downstream products and corresponding upstream products by referring to the list.

In addition, in the description of the embodiment, as illustrated in FIG. 8, the product information includes the linking-related information, but the linking-related information, that is, the information representing the linking relationship between products may be stored separately from the product information. For example, data that does not include specific information about products and only defines linking relationships may be stored separately from product information. Additionally, this data may be accessible by all companies. That is, only the structure of the product tree may be disclosed, and the specific data included in the product tree may be acquired in accordance with the access authority granted to each company.

Further, in the description of the embodiment, an example is given in which the server device 1 completes the product tree, but the role of the server device 1 may be distributed to a plurality of company terminals 2. For example, product information may be stored by a distributed database using blockchain infrastructure. In this case, a product information database may be configured by a plurality of company terminals 2. In this case, a smart contract may be used to execute the processing of each phase described above. For example, the linking processing may be executed when an account of a certain company writes a linking request to the database as a trigger.

Further, in the above-described embodiment, a plurality of companies included in the supply chain is described as companies that produce products. However, companies included in the supply chain do not necessarily have to be companies that produce products. For example, companies that transport, import, store, and wholesale products may also be included in the companies that constitute the supply chain. In one example, some of the companies may be companies that do not execute manufacturing processes, such as trading companies, sales agents, import agents, and the like. In addition, some of the companies may receive products from companies (upstream companies) located one tier above themselves and deliver products to companies (downstream companies) located one tier below themselves.

Further, in the above-described embodiment, assuming a supply chain of products related to automobiles, an OEM manufacturer is described as the most downstream company, and a company that supplies parts, materials, assemblies, and the like is described as a supplier. However, this is not necessarily the case for companies in the supply chain. Companies at each stage may be determined as appropriate depending on the product, or the like. In addition, the manufacturing activities carried out by each company until the final product is obtained may be determined as appropriate depending on the embodiment, and for example, it may include all activities that may be performed until the final product is obtained, such as excavation, processing, assembly, transportation, and storage.

Further, the processing described as being performed by one device may be shared and executed by a plurality of devices. Alternatively, the processing described as being performed by different devices may be performed by one device. In a computer system, the hardware configuration (server configuration) that implements each function can be flexibly changed.

The present disclosure can also be realized by supplying a computer program implementing the functions described in the above-described embodiments to a computer, and having one or more processors included in the computer read and execute the program. Such a computer program may be provided to the computer by a non-temporary computer-readable storage medium connectable to a system bus of the computer, or may be provided to the computer via a network. The non-temporary computer-readable storage medium includes, for example, any type of disk, such as a magnetic disk (floppy (registered trademark) disk hard disk drive (HDD), and the like), and an optical disks (CD-ROM, DVD disk, Blu-ray disk, and the like), a read-only memory (ROM), a random access memory (RAM), an EPROM, an EEPROM, a magnetic card, a flash memory, an optical card, or any type of medium suitable for storing an electronic instruction.

## Claims

1. A server device (1) comprising:

   a storage device that is configured to store product information on a product of each company included in a supply chain for each company; and
   a control unit (11),
   wherein the product information includes traceability-related information, and
   wherein the control unit (11) is configured to

collect actual result data related to an actual product production result of a first product at a predetermined time,

update the traceability-related information corresponding to the first product using the actual result data, and update the traceability-related information corresponding to the first product using alternative data stored in the storage device when the actual result data cannot be collected at the predetermined time.

2. The server device (1) according to claim 1, wherein the control unit (11) is configured to periodically collect the actual result data and update the traceability-related information corresponding to the first product.

3. The server device (1) according to claim 2,

wherein the storage device is configured to store a plurality of types of the alternative data for the first product, and wherein the control unit (11) is configured to select a type of the alternative data to be used based on a characteristic of the actual result data collected in the past.

4. The server device (1) according to claim 3, wherein the alternative data includes either (1) a first type of alternative data generated based on the actual result data collected in the past, or (2) a second type of alternative data generated based on predetermined information corresponding to the first product.

5. The server device (1) according to claim 4,

wherein the control unit (11) is configured to receive and store the product information from a company that produces the first product, and wherein the predetermined information is an initial value of the traceability-related information included in the received product information.

6. The server device (1) according to claim 4,

wherein the traceability-related information includes a carbon footprint of products value, which is a value used to track the carbon footprint, and wherein the control unit (11) is configured to select a type of the alternative data to be used based on a fluctuation range of the carbon footprint of products value during a predetermined period in the past, the carbon footprint of products being included in the actual result data.

7. The server device (1) according to claim 6, wherein the control unit (11) is configured to use the second type of alternative data when the fluctuation range of the carbon footprint of products value in a first period in the past is equal to or greater than a predetermined value with respect to the actual result data.

8. The server device (1) according to any one of claims 1 to 7, wherein the traceability-related information includes a value regarding an amount of greenhouse gas emitted when producing the first product.

9. The server device (1) according to any one of claims 1 to 7, wherein the traceability-related information includes a value regarding an amount of energy consumed when producing the first product.

10. The server device (1) according to any one of claims 1 to 7, wherein the traceability-related information includes a value representing a recycling rate regarding a predetermined raw material.

11. The server device (1) according to any one of claims 1 to 7, wherein the traceability-related information includes a value representing a score regarding due diligence.

12. An information processing method that is executed by a server device (1),

wherein the server device (1) includes a storage device that is configured to store product information on a product of each company included in a supply chain for each company, and a control unit (11), wherein the product information includes traceability-related information, and wherein the information processing method comprising:

collecting actual result data related to an actual product production result of a first product at a predetermined time;
updating, by the control unit (11), the traceability-related information corresponding to the first product using the actual result data; and
updating, by the control unit (11), the traceability-related information corresponding to the first product using alternative data stored in the storage device when the actual result data cannot be collected at the predetermined time.

13. The information processing method according to claim 12, further comprising periodically collecting, by the control unit (11), the actual result data and updating the traceability-related information corresponding to the first product.

14. The information processing method according to claim 13, further comprising:

storing, by the storage device, a plurality of types of the alternative data; and
selecting, by the control unit (11), a type of the alternative data to be used based on a characteristic of the actual result data collected in the past.

15. A non-transitory storage medium storing instructions that are executable by one or more processors and that cause the one or more processors to perform method comprising:
the information processing method according to any one of claims 12 to 14.

FIG. 1

# FIG. 2

| Tier0 | Tier1 | Tier2 | Tier3 |
|-------|-------|-------|-------|

FINAL PRODUCT X

PRODUCT A1

PRODUCT B1

PRODUCT C1

PRODUCT D1

. . .

PRODUCT A11

PRODUCT A12

PRODUCT A13

. . .

PRODUCT A111

PRODUCT A121

PRODUCT A122

PRODUCT A123

EP 4 439 425 A1

# FIG. 3

SERVER DEVICE

PRODUCT INFORMATION A

PRODUCT INFORMATION B

PRODUCT INFORMATION B

(III) GENERATE PRODUCT TREE BY LINKING BETWEEN PIECES OF PRODUCT INFORMATION BASED ON LINKING INFORMATION

(I) TRANSMIT NFORMATION (PART INFORMATION) REGARDING PRODUCT MANUFACTURED BY SUBJECT COMPANY

(II) TRANSMIT LINKING REQUEST

COMPANY TERMINAL

COMPANY TERMINAL

PRODUCT INFORMATION A

PRODUCT INFORMATION B

COMPANY CA THAT PRODUCES DOWNSTREAM PRODUCT AX (TierN)

COMPANY CB THAT PRODUCES UPSTREAM PRODUCT AY (TierN+1)

DOWNSTREAM SIDE ← → UPSTREAM SIDE

# FIG. 4

SERVER DEVICE 1

CONTROL UNIT 11
- CPU
- RAM
- ROM

STORAGE UNIT 12
- PROGRAM
- PRODUCT INFORMATION
- ACCOUNT INFORMATION

COMMUNICATION MODULE 13

INPUT/OUTPUT DEVICE 14

EP 4 439 425 A1

# FIG. 5

COMPANY TERMINAL 2

CONTROL UNIT 21

CPU

RAM

ROM

STORAGE UNIT 22

PROGRAM

COMMUNICATION MODULE
23

INPUT/OUTPUT DEVICE
24

# FIG. 6

SERVER DEVICE 1

CONTROL UNIT 11

INFORMATION
COLLECTION UNIT
111

LINKING UNIT
112

UPDATE UNIT
113

INFORMATION
PROVISION UNIT
114

STORAGE UNIT 12

PRODUCT
INFORMATION

ACCOUNT
INFORMATION

# FIG. 7

COMPANY TERMINAL 2

CONTROL UNIT 21

PRODUCT INFORMATION
GENERATION UNIT
211

LINKING UNIT
212

INFORMATION
ACQUISITION UNIT
213

# FIG. 8

| COMPANY ID | | C001 |
|---|---|---|
| COMPANY NAME | | COMPANY A |
| PRODUCT ID | | P001 |
| PRODUCT NAME | | PRODUCT A |
| LINKING-RELATED INFORMATION | UPSTREAM PRODUCT INFORMATION | (NOT LINKED) |
| TRACEABILITY-RELATED INFORMATION | MATERIAL USAGE AMOUNT (LITHIUM) | X[g] |
| | MATERIAL USAGE AMOUNT (NICKEL) | X[g] |
| | MATERIAL USAGE AMOUNT (COBALT) | X[g] |
| | MATERIAL USAGE AMOUNT (LEAD) | X[g] |
| | $CO_2$ EMISSION AMOUNT DURING PRODUCTION | X[g] |
| | POWER CONSUMPTION AMOUNT DURING PRODUCTION | X[g] |
| | DD INFORMATION | . . . |
| . . . | . . . | . . . |

# FIG. 9

EP 4 439 425 A1

PRODUCT INFORMATION A OF COMPANY CA → 

PRODUCT INFORMATION B OF COMPANY CB →

INFORMATION COLLECTION UNIT 111

PRODUCT INFORMATION A

PRODUCT INFORMATION B

EXECUTE LINKING BETWEEN PIECES OF PRODUCT INFORMATION

LINKING REQUEST (FROM COMPANY CA)

PRODUCT INFORMATION B

PRODUCT INFORMATION A

LINKING UNIT 112

COLLECT INFORMATION FOR PERFORMING LINKING (TO COMPANY CB)

ACTUAL RESULT DATA OF COMPANY CA →

ACTUAL RESULT DATA OF COMPANY CB →

UPDATE UNIT 113

UPDATE TRACEABILITY-RELATED INFORMATION BASED ON ACTUAL RESULT DATA

GENERATE PRODUCT TREE BASED ON PRODUCT INFORMATION

INFORMATION PROVISION UNIT 114

PRODUCT TREE

# FIG. 10

| COLLECT CFP VALUES INCLUDED IN PAST ACTUAL RESULT DATA |
| --- |

| DEFAULT CFP VALUE CORRESPONDING TO PRODUCT |
| --- |

| CFP VALUE (INITIAL VALUE) INCLUDED IN PRODUCT INFORMATION RECEIVED FROM COMPANY TERMINAL |
| --- |

| ALTERNATIVE DATA |
| --- |

# FIG. 11

POWER
CONSUMPTION
AMOUNT

1101

1102

1103

TIME

# FIG. 12

Tier0
Tier1
Tier2
Tier3

FINAL PRODUCT X

PRODUCT A1
EMISSION AMOUNT
$E_{A1}$ [g]

PRODUCT B1
EMISSION AMOUNT
$E_{B1}$ [g]

PRODUCT C1
EMISSION AMOUNT
$E_{C1}$ [g]

PRODUCT D1
EMISSION AMOUNT
$E_{D1}$ [g]

PRODUCT E1
EMISSION AMOUNT
$E_{E1}$ [g]

PRODUCT A11
EMISSION AMOUNT
$E_{A11}$ [g]

PRODUCT A12
EMISSION AMOUNT
$E_{A12}$ [g]

PRODUCT A13
EMISSION AMOUNT
$E_{A13}$ [g]

PRODUCT A14
EMISSION AMOUNT
$E_{A14}$ [g]

PRODUCT A111
EMISSION AMOUNT
$E_{A111}$ [g]

PRODUCT A121
EMISSION AMOUNT
$E_{A121}$ [g]

PRODUCT A122
EMISSION AMOUNT
$E_{A122}$ [g]

PRODUCT A123
EMISSION AMOUNT
$E_{A123}$ [g]

# FIG. 13

EP 4 439 425 A1

# FIG. 14

EP 4 439 425 A1

```
FINAL
PRODUCT X ─┬─ PRODUCT A1 ─┬─ NON-DISCLOSURE ── NON-DISCLOSURE
           │              │
           │              ├─ PRODUCT A12 ─┬─ PRODUCT A121
           ├─ NON-DISCLOSURE              │
           │              ├─ NON-DISCLOSURE ── PRODUCT A122
           ├─ NON-DISCLOSURE              │
           │              └─ NON-DISCLOSURE ── PRODUCT A123
           ├─ NON-DISCLOSURE
           │
           └─ NON-DISCLOSURE
```

AAA Co., Ltd.
PRODUCT A12

| | |
|---|---|
| LITHIUM USAGE AMOUNT | X [g] |
| AMOUNT OF RECYCLED LITHIUM | X [g] |
| NICKEL USAGE AMOUNT | X [g] |
| AMOUNT OF RECYCLED NICKEL | X [g] |
| COBALT USAGE AMOUNT | X [g] |
| AMOUNT OF RECYCLED COBALT | X [g] |
| LEAD USAGE AMOUNT | X [g] |
| AMOUNT OF RECYCLED LEAD | X [g] |
| CARBON DIOXIDE EMISSION AMOUNT | [NON-DISCLOSURE] |
| DD INFORMATION | ... |

# FIG. 15

```
          ┌─────────────┐
          │    START    │
          └──────┬──────┘
                 │
S11              │
  ┌──────────────┴──────────────┐
  │   RECEIVE LINKING REQUEST    │
  │     FOR SPECIFIC PRODUCT     │
  └──────────────┬──────────────┘
                 │
                 │
S12              │
  ┌──────────────┴──────────────┐
  │ SPECIFY LINKING TARGET PRODUCT BY │
  │ INTERACTING WITH UPSTREAM COMPANY/ │
  │      DOWNSTREAM COMPANY      │
  └──────────────┬──────────────┘
                 │
                 │
S13              │
  ┌──────────────┴──────────────┐
  │  UPDATE PRODUCT INFORMATION AND  │
  │   REFLECT CONTENT OF LINKING  │
  └──────────────┬──────────────┘
                 │
          ┌──────┴──────┐
          │     END     │
          └─────────────┘
```

# FIG. 16

START

S21

REQUEST INFORMATION
ON PRODUCT TREE

S22

INTEGRATE TRACEABILITY-RELATED
INFORMATION AND GENERATE
INFORMATION ON PRODUCT TREE

S22

EXECUTE CONCEALMENT
PROCESSING ACCORDING TO AUTHORITY

S24

OUTPUT INFORMATION

END

# FIG. 17

START

S31
COLLECT ACTUAL RESULT DATA

S32 ANY PRODUCT
FOR WHICH COLLECTION
HAS FAILED?

NO

YES

S33
GENERATE ALTERNATIVE DATA AND
REPLACE IT WITH ACTUAL RESULT DATA

S34
UPDATE CFP VALUE IN
PRODUCT INFORMATION

END

Europäisches
Patentamt

European
Patent Office

Office européen
des brevets

**EUROPEAN SEARCH REPORT**

Application Number

EP 24 15 8122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/276679 A1 (FANG MILI [CN] ET AL) 27 September 2018 (2018-09-27) * paragraphs [0005], [0028], [0045], [0048] * | 1-15 | INV. G06Q10/08 G06Q30/018 |

- - - - -

TECHNICAL FIELDS SEARCHED (IPC)

G06Q

The present search report has been drawn up for all claims

| Place of search | Date of completion of the search | Examiner |
|---|---|---|
| Munich | 31 July 2024 | Haitof, Houssam |

EPO FORM 1503 03.82 (P04C01)

## ANNEX TO THE EUROPEAN SEARCH REPORT
## ON EUROPEAN PATENT APPLICATION NO.

EP 24 15 8122

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | Publication date | Patent family member(s) | Publication date |
|---|---|---|---|
| US 2018276679 A1 | 27-09-2018 | CN 107844875 A | 27-03-2018 |
| | | EP 3518154 A1 | 31-07-2019 |
| | | US 2018276679 A1 | 27-09-2018 |
| | | WO 2018049796 A1 | 22-03-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004171146 A